# EUROPÄISCHE PATENTSCHRIFT

(11) **EP 2 588 645 B1**
(45) Veröffentlichungstag und Bekanntmachung des Hinweises auf die Patenterteilung: **30.05.2018**
(21) Anmeldenummer: 11741138.9
(22) Anmeldetag: 30.06.2011
(51) Int. Cl.: C23C 18/50, C25D 5/18, C25D 5/34, C25D 5/00, C23C 18/16, C25D 3/56

(54) **VERFAHREN ZUR ABSCHEIDUNG EINER NICKEL-METALL-SCHICHT**
METHOD FOR DEPOSITING A NICKEL-METAL LAYER
PROCÉDÉ DE DÉPÔT D'UNE COUCHE NICKEL-MÉTAL

(30) Priorität: 30.06.2010 DE 102010025684
(43) Veröffentlichungstag der Anmeldung: 08.05.2013
(73) Patentinhaber: RDM Family Investments LLC, San Diego CA 92103 (US)
(72) Erfinder: KOPPE, Stefan, 79199 Kirchzarten (DE)
(74) Vertreter: Dennemeyer & Associates S.A.
(86) Internationale Anmeldenummer: PCT/EP2011/061073
(87) Internationale Veröffentlichungsnummer: WO 2012/001134

(56) Entgegenhaltungen:
- US-A- 3 303 111
- US-A- 3 485 725
- US-A- 4 131 519
- US-A- 4 758 479
- US-A- 4 833 041
- US-A- 5 718 745
- US-A1- 2004 011 432
- US-A1- 2008 202 922

## Beschreibung

### Gebiet der Erfindung

Die Erfindung betrifft ein Verfahren zur Abscheidung einer Nickel-Metall-Schicht zur Färbung von Oberflächen, sowie ein Bad zur Abscheidung einer solchen Schicht.

### Stand der Technik

Techniken zum Verändern der Farbe von metallischen Oberflächen (Färbung) sind aus dem Stand der Technik seit langem bekannt. Meistens werden die Oberflächen mit chemischen Lösungen behandelt. Dabei kann die Färbung auch durch einen elektrolytischen Prozess geschehen.

So sind beispielsweise für Nickeloberflächen, welche galvanisch oder elektrolytisch hergestellt sein können, mehrere Färbemethoden bekannt. Für eine chemische Färbung ist es möglich, die Oberfläche mit oxidierenden Lösungen wie Salpetersäure oder Nitraten zu behandeln. Dabei bildet sich auf der Oberfläche eine Nickeloxidschicht.

Die Schrift US 2006/0228569 A1 beschreibt ein mehrstufiges Verfahren, welches eine Schwarzfärbung von stromlos abgeschiedenen Nickelschichten durch Behandlung mit Nitratlösungen vorsieht.

Im Gebiet der galvanischen Verfahren ist es bekannt, Nickeloberflächen elektrolytisch mit Nickelsulfid- oder Nickelthiocyanat-Lösungen zu schwärzen. Die Schrift US 2,844,530 beschreibt ein galvanisches Verfahren zur Schwärzung von Nickelschichten. Dazu wird ein elektrolytisches Bad mit Nickelchlorid, Natriumthiocyanat und Zinkchlorid verwendet und bei Raumtemperatur eine weitere Schicht abgeschieden. Solche Verfahren machen sich die Reduktion von Natriumthiocyanat und die Bildung von schwarzem Nickelsulfid zu nutze.

Außerdem gibt es Zink-Nickel-Schichten, d.h. Schichten mit hohem Zinkgehalt (>80 Gew.-%), welche beispielsweise durch Nachtauchlösungen schwarz gefärbt werden können. Allerdings sind diese Schichten nicht salzsäurestabil, sondern zeigen unter Korrosion einen Farbverlust, der auf die (gewollte) Bildung von Zinkoxid zurückzuführen ist. Die Zink-Nickel-Schicht wird als sogenannte "Opferschicht" als Korrosionsschutzschicht eingesetzt.

Außerdem ist im Bereich der stromlos abgeschiedenen Nickelschichten bekannt, dass sich mit oxidierenden Lösungen, z. B. mit giftigen Chromaten, eine Schwarzfärbung von stromlos abgeschiedenen Nickelschichten, d.h. Nickel/Phosphor-Schichten, erreichen lässt.

Allerdings sind solche Schichten nicht säurebeständig und weisen auch nachteilige Eigenschaften in Bezug auf ihre Adhäsionsfähigkeit auf. Auch sind die Bestandteile der Lösungen giftig. Die Schichten sind außerdem empfindlich gegenüber mechanischer Einwirkung.

Die Verfahren im Stand der Technik haben auch den Nachteil, dass beispielsweise bei beschichteten Gegenständen das Färben in einem separaten Bad erfolgen muss, da sich die Zusammensetzung des Färbebades nicht mit dem Abscheidebad oder den Bedingungen der Abscheidung, z.B. erhöhte Temperatur, verträgt.

Im Fall von galvanischen Verfahren ist es außerdem nachteilig, dass diese Verfahren in Bezug auf die zu färbende (oder zu beschichtende) Oberfläche begrenzt sind. So ist es mit galvanischen Verfahren nicht möglich, feine Strukturen, Hohlräume, Netze oder Metallgewebe gleichmäßig zu beschichten, da hierbei, bedingt durch Abschirmeffekte im Innenraum, kein Feld zu Abscheidung anliegt.

Aus der Schrift GB 1 222 969 A ist bekannt, dass man an Bäder zur stromlosen Abscheidung Spannung anlegen kann, um die Abscheidung des stromlos abgeschiedenen Metalls zu unterstützen. Es werden keine Legierungen abgeschieden.

Die Druckschriften US 4,758,479, US 3,303,111, US 4,833,041, US 4,131,519 und US 3,485,725 offenbaren unterschiedliche Verfahren zur Abscheidung verschiedener Nickel-Metall-Schichten bzw. Legierungen, bei denen zum Teil auch Kombinationen von stromloser und galvanischer Abscheidung in Betracht gezogen werden. Allen diesen Verfahren ist gemeinsam, dass bei einer gegebenenfalls auftretenden galvanischen Abscheidung die Stromdichte entweder gar nicht variiert oder höchstens periodisch unterbrochen wird.

### Aufgabe

Aufgabe der Erfindung ist es, ein Verfahren anzugeben, das die Nachteile des Standes der Technik vermeidet und es ermöglicht, auf einfache und kostengünstige Weise eine Färbung von Metallschichten zu erreichen.

### Lösung

Diese Aufgabe wird durch die Erfindung mit den Merkmalen des unabhängigen Anspruchs gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen des unabhängigen und der abhängigen Ansprüchen.

Die Aufgabe wird durch ein Verfahren zur Abscheidung einer Nickel-Metall-Schicht auf einem Substrat gelöst, das folgende Schritte umfasst:
a) Bereitstellung eines Nickelbads zur stromlosen Abscheidung einer Nickelschicht, wobei das Bad zusätzlich eine Verbindung eines weiteren Metalls enthält;
b) Abscheidung einer Nickel-Metall-Schicht durch gleichzeitige
   b1) Abscheidung des Nickels aus dem Nickelbad und
   b2) spannungsunterstützte Abscheidung der weiteren Metallverbindung aus dem bereitgestellten Bad
   b3) wobei die Stromdichte kontinuierlich oder in Stufen ansteigend verändert wird.

Im Folgenden werden einzelne Verfahrensschritte näher beschrieben. Das zu schildernde Verfahren kann auch weitere, nicht genannte Schritte aufweisen.

In einem ersten Schritt stellt man zunächst ein wässriges, chemisches Nickelbad mit einem Gehalt an Nickel in einem Bereich von 1 bis 15 g/l und einem Gehalt an Reduktionsmittel in einem Bereich von 20 bis 50 g/l bereit, verrührt dieses Bad gut und stellt danach den pH-Wert auf einen Wert im Bereich von 3,0 bis 5,0 ein, bevorzugt im Bereich von 3,8 bis 4,2.

Als Substrat setzt man beispielsweise ein Substrat aus Stahl, Aluminium, Kupfer, Messing, Aluminiumlegierungen, Titan, Titanlegierungen, Eisen, Magnesium, Magnesiumlegierungen, Nickel, Nickellegierungen, Bronze oder Edelstahl ein, wobei Edelstahl bevorzugt ist.

Es kann sich aber auch um ein Substrat aus Kunststoff handeln, beispielsweise Polyacrylate, Polyimide, Nylon, Polyamide, Polyethylen oder Polypropylen.

Die Oberfläche des Substrats kann in Abhängigkeit vom verwendeten Substrat vorbehandelt sein, beispielsweise durch Entfettung, Beizung, z. B. mit einem Lösungsmittel, Laugen, Säuren, Nickel-Strike oder ähnlichen dem Fachmann bekannten Verfahren.

So kann ein nichtleitendes Substrat bereits mit einer leitfähigen Schicht versehen sein, z. B. einer stromlos abgeschiedenen Nickelschicht.

Die Nickelionen des Bades liegen in der Regel als Lösungen der Salze Nickelchlorid, Nickelsulfat, Nickelcarbonat und/oder Nickelacetat vor. Der Nickelgehalt liegt üblicherweise in einem Bereich von 3 bis 10 g/l.

Als Reduktionsmittel im Bad wird bevorzugt eine Phosphor- oder Borverbindung verwendet. Das Reduktionsmittel im Bad ist besonders bevorzugt ein Hypophosphit. Ganz besonders bevorzugt ist das Reduktionsmittel Natriumhypophosphit und/oder Kaliumhypophosphit. Als Borverbindung kann Dimethylaminoboran, Diethylaminoboran oder Natriumborhydrid verwendet werden. Das Reduktionsmittel liegt üblicherweise in einer Konzentration in einem Bereich von 32 bis 42 g/l im Bad vor.

Im Bad ist üblicherweise auch mindestens ein Komplexbildner enthalten, der insbesondere aus der Gruppe Monocarbonsäuren, Dicarbonsäuren, Hydroxycarbonsäuren, Ammoniak und Alkanolamine ausgewählt ist. Der Komplexbildner liegt in der Regel in einer Konzentration in einem Bereich von 1 bis 15 g/l im Bad vor. Komplexbildner komplexieren Nickelionen und verhindern so zu hohe Konzentrationen an freien Nickelionen. Dadurch wird die Lösung stabilisiert und das Ausfallen beispielsweise von Nickelphosphit zurückgedrängt.

Das Bad kann auch mindestens einen Beschleuniger enthalten, der insbesondere aus der Gruppe Fluoride, Boride oder Anionen von Mono- und Dicarbonsäuren ausgewählt ist. Der Beschleuniger liegt üblicherweise in einer Konzentration in einem Bereich von 0,001 bis 1 g/l im Bad vor. Beschleuniger können Hypophosphitionen aktivieren und so die Abscheidung beschleunigen.

In üblichen Nickelbädern ist auch mindestens ein Stabilisator enthalten, der insbesondere aus der Gruppe Blei-, Zinn-, Arsen-, Molybdän-, Cadmium-, Thallium-Ionen und/oder Thioharnstoff ausgewählt ist. Der Stabilisator liegt üblicherweise in einer Konzentration in einem Bereich von 0,01 bis 250 mg/l im Bad vor. Stabilisatoren werden eingesetzt, um die Zersetzung der Lösung zu verhindern, indem sie katalytisch aktive Reaktionskeime maskieren.

Im Bad ist üblicherweise auch mindestens ein pH-Wert Puffer enthalten, der insbesondere ein Natriumsalz eines Komplexbildners und/oder auch die dazugehörige entsprechende Säure ist. Der Puffer liegt in einer Konzentration in einem Bereich von 0,5 bis 30 g/l im Bad vor. Durch Puffer kann der pH-Wert über längere Betriebszeiten konstant halten werden.

Im Bad kann auch mindestens ein pH-Regulierer enthalten sein, der insbesondere aus der Gruppe Schwefelsäure, Salzsäure, Natriumhydroxid, Natriumcarbonat und/oder Ammoniak ausgewählt ist. Der pH-Regulierer liegt üblicherweise in einer Konzentration in einem Bereich von 1 bis 30 g/l im Bad vor. pH-Regulierer erlauben es, den pH-Wert des Bades nachzuregulieren.

Im Bad kann auch mindestens ein Netzmittel enthalten sein, das insbesondere aus der Gruppe der ionogenen und/oder nicht-ionogenen Tenside ausgewählt ist. Das Netzmittel liegt üblicherweise in einer Konzentration in einem Bereich von 0,001 bis 1 g/l im Bad vor. Netzmittel erhöhen die Benetzbarkeit der zu vernickelnden Oberfläche mit dem Elektrolytbad.

In einer bevorzugten Ausführungsform enthält das Bad keine Thiocyanat-Ionen oder organische schwefelhaltige Verbindungen, welche zur Bildung von Nickelsulfid führen.

Zusätzlich können in dem Bad auch Partikel, insbesondere Polymerpartikel, dispergiert sein. Diese sind bevorzugt aus Fluorpolymeren, ganz besonders bevorzugt aus Tetrafluorpolyethylen. Diese Teilchen können in einer Konzentration zwischen 1 und 30 g/l vorliegen. Die durchschnittliche Teilchengröße liegt dabei bevorzugt in einem Bereich von 0,01 bis 1 µm. Zur weiteren Funktionalisierung der daraus resultierenden Schicht können in der herzustellenden Schicht in Form einer Dispersion funktionelle Partikel eingebaut werden: beispielsweise PTFE zur Reibungsminimierung oder SiC oder andere Hartstoffe zur Erhöhung des Verschleißschutzes, mit den oben genannten Anteilen und Teilchengrößen.

Bei der Verwendung von Partikeln im Bad enthält die erhaltene Schicht die mitabgeschiedenen Partikel. Bevorzugt handelt es sich um Hartstoffpartikel oder Polymerpartikel. Diese sind bevorzugt aus Fluorpolymeren, besonders bevorzugt aus Tetrafluorpolyethylen (PTFE) oder Perfluoralkoxylalkan (PFA). Diese Teilchen sind üblicherweise in einem Bereich von 1 bis 30 Gew. % in der Beschichtung vorhanden. Die durchschnittliche Teilchengröße liegt bevorzugt in einem Bereich von 0,01 bis 1 µm.

Das kontinuierliche oder in Stufen ansteigende Verändern der Stromdichte geschieht in der Regel durch Veränderung der Spannung. Mit zunehmender Stromdichte wird zunehmend mehr Metall mit abgeschieden. Es entsteht eine Gradientenschicht. Beim Erreichen der gewünschten Abscheidung wird das Verfahren beendet.

Die ansteigende Veränderung der Stromdichte kann auch mehrmals durchgeführt werden, wenn nach Erreichen des Maximalwerts erneut bei einem Minimalwert begonnen wird, wie beispielsweise bei einer Sägezahnspannung. Der Maximalwert ist dabei die vorstehend angegebene Stromdichte. Der Minimalwert kann 0 sein, liegt aber in der Regel zwischen 0,01 und 0,1 A/dm2.

Mit Steigerung der elektrischen Feldstärke nimmt der Einbau des reduzierten Metalls in die abgeschiedene Nickel-Schicht zu. Durch die Veränderung der Feldstärke, und bevorzugt das sukzessive Verweilen auf unterschiedlichen Spannungsplateaus, kann die Inselbildung, z. B. die Bildung von Zink-Lokalelementen, und die Übersättigung an Zink an der Oberfläche vermieden werden. Auch können bei Verwendung von konstanten zu hohen Stromdichten an den Rändern oder Kanten Unregelmäßigkeiten aufgrund der zu hohen lokalen Feldstärke auftreten. Dies wird durch die Veränderung der Stromdichte vermieden.

Bevorzugt wird die Stromdichte in Stufen, bevorzugt in Stufen von 0,1 V bis 5 V, bevorzugt 0,5 V bis 1 V verändert. Die jeweilige Verweildauer pro Stufe beträgt zwischen 30 Sekunden und 15 Minuten, wobei die Dauer von der zu beschichtenden Fläche, Größe des Substrats, Geometrie, Struktur und der Anordnung des Substrats im Bad abhängig ist.

Nickelschichten im Sinne der Erfindung sind auch solche Schichten, die überwiegend aus Nickel bestehen. In Abhängigkeit vom Reduktionsmittel handelt es sich um Nickel/Phosphor-, Nickel/Bor- oder Nickel/Phosphor/Bor-Schichten.

Die Schichtdicke der abgeschiedenen Nickel-Metall-Schicht beträgt vorteilhafterweise höchstens 100 µm, insbesondere höchstens 20 µm, ganz besonders bevorzugt höchstens 5 µm. Die Schichtdicke kann durch die Dauer der Abscheidung kontrolliert werden.

Das Bad enthält zusätzlich eine Verbindung eines weiteren Metalls. Bei dieser Metallverbindung kann es sich um die Verbindung eines edlen oder unedlen Metalls handeln. Bevorzugt sind unedle Metalle, insbesondere Metalle, welches ein geringeres Redoxpotential als Nickel (-0.49 V) aufweisen, wie z. B. Zn, Nb, V oder Mn. Die Verbindung ist üblicherweise ein Salz des Metalls, welches in dem Bad löslich ist. Beispiele für Anionen sind Halogenide (F-, Cl-, Br-, I-), Carbonat-Ionen (CO32-, HCO32-) oder Sulfat-Ionen (SO42-).

In einer bevorzugten Ausführungsform der Erfindung ist die Metallverbindung eine Zink-Verbindung. Besonders bevorzugt sind Zinksalze, wie Zinkchlorid, Zinkcarbonat oder Zinksulfat.

Zinkverbindungen sind besonders bevorzugt, da mit ihnen eine tiefschwarze Färbung der Oberfläche erreicht werden kann. Die erhaltene Schicht ist den mit Nachtauchlösungen oder Schwarznickel-Lösungen erhaltenen Schichten deutlich überlegen.

Die erhaltenen Schichten enthalten kein Nickelsulfid.

Die erhaltene Schicht weist eine elektrische und thermische Leitfähigkeit auf und ist bis über 250 °C temperaturbeständig. Sie ist außerdem säurebeständig, insbesondere salzsäurebeständig, und beständig gegen Salzlösungen. Sie ist auch schweiß- und lötbar. Solche Schichten sind über eine Nachbehandlung mit Lösungen nicht erhältlich.

Die Metallverbindung wird so zugegeben, dass ein Gehalt zwischen 0,05 mol/l und 0,5 mol/l, bevorzugt zwischen 0,07 mol/l und 0,3 mol/l, bezogen auf das Metall bzw. die MetallIonen, im Bad vorliegt.

Im Fall von ZnCl2 wird ein Gehalt zwischen 10 und 40 g/l bevorzugt.

Wichtig ist dabei, dass das zur spannungsunterstützten, bzw. spannungsgestützten, oder elektrisch unterstützten Abscheidung verwendete Bad einem Bad zur stromlosen Abscheidung von Nickelschichten entspricht, dem noch weitere Metallsalze hinzugefügt wurden. Die Metallsalze können auch erst kurz vor der elektrolytischen Abscheidung hinzugefügt werden.

In einer Weiterbildung der Erfindung wird Schritt b) bei einer Temperatur von über 50 °C durchgeführt. Dadurch findet während der spannungsunterstützten Abscheidung des Metalls im Hintergrund die Reaktion der stromlosen Abscheidung statt. Dies erhöht die Haftung und Haltbarkeit der erzeugten Nickel-Metall-Schicht. Bevorzugt wird Schritt b) bei einer Temperatur zwischen 80 und 95 °C durchgeführt, bevorzugt zwischen 86 °C und 90 °C, besonders bevorzugt bei 88 °C.

Vor dem Beginn der elektrisch unterstützten Abscheidung der Nickel-Metallschicht kann auf dem Substrat auch schon eine stromlose Schicht abgeschieden werden. So kann beispielsweise auf einem nicht leitfähigen Substrat zunächst stromlos eine leitfähige Schicht abgeschieden werden. Fall die stromlose Abscheidung schon aus dem Bad mit der weiteren Metallverbindung geschieht, kann es bereits zu einem geringen Einbau des weiteren Metalls in die stromlos abgeschiedene Nickelschicht kommen. In diesem Fall wird erst nach erfolgter Abscheidung das Hilfsfeld angeschaltet.

Die Abscheidung wird elektrisch unterstützt. Dies bedeutet, dass zwischen dem zu beschichtenden Werkstück und einer Elektrode eine Spannung angelegt wird, wodurch ein elektrisches Feld entsteht. In der Regel wird das zu beschichtende Werkstück kathodisch und die mindestens eine Elektrode anodisch geschaltet. Die mindestens eine Elektrode kann dabei entsprechend des zu beschichtenden Werkstücks geformt sein.

Die Elektrode ist bevorzugt galvanisch unlöslich, d. h. sie besteht nicht aus dem Metall der Metallverbindung. Bevorzugtes Material der Elektrode ist Graphit.

Durch das angelegte Feld wird die Reduktion der weiteren Metallverbindung verstärkt, bzw. hervorgerufen, wobei es durch die gleichzeitig ablaufende stromlose Abscheidung der Nickelschicht zu einer Einlagerung der reduzierten Metallverbindung in die Nickelschicht kommt. Die Metallverbindung kann dabei sowohl durch das Hilfsfeld, als auch durch das im Bad vorhandene Reduktionsmittel reduziert werden. Ohne an eine Theorie gebunden zu sein, wird vermutet, dass das Hilfsfeld lediglich die Metallionen der Metallverbindung zum Substrat transportiert und auf diese Weise den Einbau der reduzierten Metallverbindung verstärkt. Dadurch entsteht eine Nickel/Phosphor/Metall-Schicht bzw. eine Nickel/Bor/Metall-Schicht.

Das Verhältnis der Fläche der Anode im Bad zu der projizierten Werkstückoberfläche (Schattenfläche) beträgt bevorzugt zwischen 1:0,5 und 1:2, bevorzugt 1:1 (+/- 50 %).

In einer bevorzugten Ausführungsform wird eine Stromdichte zwischen 0,01 und 5 A/dm2, bevorzugt zwischen 0,1 und 3 A/dm2, eingestellt, bezogen auf die projizierte Werkstückoberfläche.

Neben der Metallverbindung können in dem Bad noch weitere Salze zur Erhöhung der Leitfähigkeit enthalten sein (Leitsalze). Solche Salze sind bevorzugt Salze der Alkali- oder Erdalkalimetalle, wie Lithium, Natrium oder Kalium. Davon unabhängig sind die Anionen der Salze ausgewählt aus der Gruppe der Anionen enthaltend Halogenide (F-, Cl-, Br-, I-), Carbonat-Ionen (CO32-, HCO32-), Hydroxid-Ionen oder Sulfat-Ionen (SO42-). Beispiele für solche Salze sind Kaliumsalze, wie Kaliumchlorid oder Kaliumhydroxid, besonders bevorzugt Kaliumchlorid.

Der Gehalt an solchen Leitsalzen liegt bevorzugt zwischen 0,1 und 0,8 mol/l bezogen auf das Kation des Leitsalzes, z.B. 0,1 bis 0,8 mol/l Kalium-Ionen im Falle eines Kaliumsalzes. Bevorzugt sind 0,13 bis 0,67 g/mol an Leitsalz, bzw. Kalium-Ionen. Am Beispiel von Kaliumchlorid beträgt der Gehalt zwischen 10 und 50 g/l.

Die Färbung der Oberflächen wird im Wesentlichen durch die Dauer der spannungsuntertützten Abscheidung bestimmt. Bevorzugt ist eine Dauer von bis zu 60 Minuten, bevorzugt zwischen 30 Sekunden und 20 Minuten. Die Dauer hängt ebenso wie die Verweildauer von der zu beschichtenden Fläche, Größe des Substrats, Geometrie, Struktur und der Anordnung des Substrats im Bad ab. Bei kleineren Substraten kann die Dauer des Verfahrens auch unter 10 Minuten liegen.

Zusätzlich kann es notwendig sein, die Substrate während der Abscheidung im Bad zu bewegen oder das Bad zu durchmischen.

Überraschenderweise wurde nun gefunden, dass durch die Kombination der spannungsunterstützen Abscheidung durch Anlegen eines Hilfsfeldes aus einem Bad für die stromlose Abscheidung, es möglich ist, eine Nickel-Metall-Schicht abzuscheiden.

Dies erlaubt die Abscheidung auf Substraten, die normalerweise einer rein galvanischen Färbung nicht zugänglich sind. Dies könnte dadurch erklärt werden, dass durch gleichzeitig stattfindende stromlose Abscheidung und die dadurch erzeugte leitfähige Oberfläche die Abscheidung auch an Stellen ermöglicht wird, welche einer direkten galvanischen Abscheidung nicht zugänglich sind. Dies betrifft insbesondere netzartige Strukturen bzw. Hohlkörper, welche als Teile der Wandung netzartige Strukturen enthalten, beispielsweise Zylinder, Quader oder Röhren mit durchbrochenen Wandungen. Durch das erfindungsgemäße Verfahren ist es möglich, diese Strukturen auch auf der Innenseite des Hohlkörpers zu färben. Bevorzugt sind dies netzartige Strukturen mit einer Maschenweite von unter 1 mm, bevorzugt unter 0,5 mm, besonders bevorzugt unter 50 µm.

Da der Prozess auch in nur einem Bad geführt werden kann, ist er kostengünstig und schnell durchzuführen. Die erzeugten Schichten zeichnen sich durch eine besondere Haftung und Beständigkeit aus.

Der erhaltenen Schichten sind weniger rau, als die auf chemischem Wege erhaltenen gefärbten chemisch Nickelschichten. Sie sind außerdem nicht oxidisch und frei von ChromVerbindungen.

Die folgenden Beispiele sind nicht Teil der beanspruchten Erfindung, sondern sollen das Verständnis erleichtern:
Es wird außerdem ein Chemisch Nickelbad zur Färbung von leitfähigen Oberflächen beschrieben, welches zusätzlich zu den Komponenten eines chemisch Nickelbades mindestens eine Zinkverbindung enthält. Die Zusammensetzung des Bads entspricht bevorzugt der Zusammensetzung des Bades in Schritt a). Falls wie beschrieben eine Spannung angelegt wird, können mit Hilfe des Bades tiefschwarze Schichten erhalten werden.

Außerdem ist ein beschichtetes schwarzes Substrat von Interesse, das mit einer Nickel/Phosphor/Zink-Schicht oder Nickel/Bor/Zink-Schicht beschichtet ist. Bevorzugt handelt es sich um eine Nickel/Phosphor/Zink-Schicht.

Das beschichtete Substrat wurde mit dem beschriebenen Verfahren erhalten. Die Schicht ist schwarz und salzsäurefest. Sie ist außerdem elektrisch und thermisch leitfähig und ist bis über 250 °C temperaturbeständig. Sie ist auch schweiß- und lötbar. Die Dicke der Schicht liegt üblicherweise zwischen 0,1 µm und 1 µm.

Die Schicht enthält 3 bis 10 Gew.-% Phosphor, sowie ein Verhältnis von Nickel zu Zink zwischen 9:1 und 1:1, bevorzugt 9:1 zu 5:1 (in Gew.-%).

Bevorzugt ist das Substrat ein Substrat, welches mit einem rein galvanischen Verfahren nicht beschichtet werden kann. Dies sind insbesondere Substrate, welche Innenflächen aufweisen, insbesondere Vertiefungen, Röhren oder netzartige Strukturen. Bevorzugt ist das Substrat ein Hohlkörper, welcher teilweise oder vollständig durch netzartige Strukturen durchbrochene Wände aufweist. Netzartige Strukturen im Sinne der Anmeldung sind Strukturen, welche mindestens zwei Oberflächen aufweisen, wobei jede Oberfläche eine Vielzahl von Öffnungen aufweist, wobei jede Öffnung einen Durchtritt zu jeder der anderen Oberflächen ermöglicht. Dabei machen die Öffnungen mehr als 50 %, bevorzugt mehr als 70 % des Volumens zwischen den Oberflächen aus. Dies sind beispielsweise Netze, Metallgewebe oder Schwämme. Die Netze, bzw. netzartige Strukturen, weisen dabei bevorzugt eine Maschenweite von unter 1 mm, bevorzugt unter 0,5 mm, besonders bevorzugt unter 50 µm, auf. Die netzbildenden Drähte sind dabei gemessen an ihrem größten Durchmesser zwischen 50 µm und 1000 µm dick.

Das Substrat kann beispielsweise ein Zylinder oder Quader sein, welcher aus einem Netz geformt ist. Solche Strukturen finden sich insbesondere bei Sieb- oder Filterelementen.

Ein weiteres Beispiel umfasst die Verwendung des beschichteten Substrats im Automobilbereich, Sanitärbereich, Schmuckbereich, oder Elektrobereich. Beispielsweise wird das beschichtete Substrat auch in einer Anwendung, ausgewählt aus der Gruppe der Ventile, Drosseleinheiten, Architektur, Dekoration, Maschinen und Anlagen der chemischen Industrie, Finish in der Elektroindustrie, verwendet.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

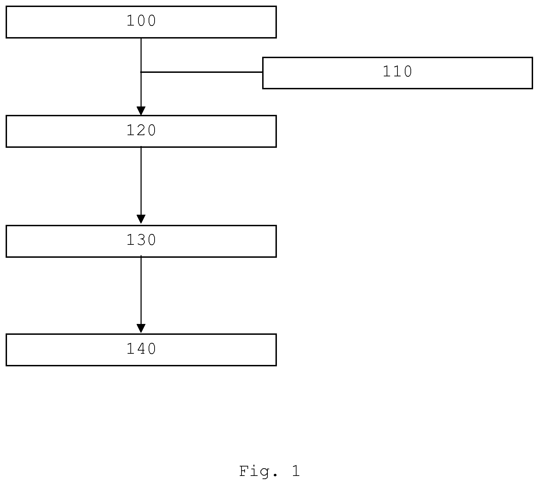

- Fig. 1: eine schematische Darstellung eines erfindungsgemäßen Verfahrens.

Figur 1 zeigt einen typischen Ablauf eines erfindungsgemäßen Verfahrens. In einem ersten Schritt wird ein Bad zur stromlosen von Nickel bereitgestellt (100). Zu diesem Bad wird mindestens eine Verbindung eines weiteren Metalls, sowie ggf. mindestens ein Leitsalz gegeben (110). Bei der Verbindung eines weiteren Metalls handelt es sich bevorzugt um eine Zinkverbindung, besonders bevorzugt um ein Zinksalz, besonders bevorzugt Zinkchlorid. Das eventuell ebenfalls zugegebene Leitsalz ist bevorzugt ein Kaliumsalz, bevorzugt Kaliumchlorid. Auf diese Weise wird ein Bad zur Abscheidung einer Nickel-Metall-Schicht (120) im Sinne der Erfindung erhalten.

In das Bad wird das Substrat eingebracht. Danach wird das Bad auf die Bedingung zur stromlosen Abscheidung von Nickel gebracht, d.h. es werden vor allem Temperatur und pH-Wert eingestellt. Danach wird zwischen dem Substrat und einer Elektrode, welche im Bad schon vorhanden ist oder eingebracht wurde, eine Spannung angelegt, um die spannungsunterstützte Abscheidung des Metalls in die Nickelschicht hervorzurufen (130). Dabei wird eine Nickel-Metall-Schicht gebildet (140).

### Beispiel:

Zu dem eingangs beschriebenen Nickelbad wurden 32 g/l Zinkchlorid und 40 g/l Kaliumchlorid gegeben. Der pH-Wert wurde mit H2SO4 auf 4,0 eingestellt. Das Bad wurde auf 88 °C erhitzt. Dabei begann spontan eine chemisch-reduktive Nickel-Phosphor-Abscheidung, wobei auch bereits Zink co-abgeschieden wurde. Die Schicht war in dieser Phase hell Anthrazit gefärbt. Nach kurzer Zeit wurden in das Bad Graphitelektroden eingeführt, wobei das Werkstück kathodisch und die Elektroden anodisch geschaltet waren. Dabei war das Verhältnis der projizierten Werkstückoberfläche zu der Anodenfläche im Elektrolyten 1:1 (mit einer Abweichung von +/- 50 %). An die Elektroden wurde ein Hilfsfeld angelegt, wobei eine Endstromdichte von 0,1 - 0,33 A/dm2 (Feldstärke im Verhältnis zur Werkstückoberfläche, Spannung von 1 V bis 3,5 V) eingestellt wurde. Das elektrische Hilfsfeld wurde in Stufen ansteigend bis zur Endfeldstärke geregelt, wobei die Stufen zwischen 0,5 V und 1 V gewählt wurden und pro Stufe zwischen 30 s und 5 Minuten verweilt wurde, z. B. 1 V / 1 Min.; 2 V / 1 Min., 3 V / 2 Min.; 3.5 V / 4 Min.. Es wurde eine tief schwarze Schicht auf dem Werkstück erhalten.

Die Schicht weist eine elektrische und thermische Leitfähigkeit auf und ist bis über 250 °C temperaturbeständig.

Die erhaltene Schicht ist außerdem säurebeständig, insbesondere salzsäurebeständig.

Die Schwarzfärbung ist auf den Einbau von Zink zurückzuführen. Dies lässt sich durch Behandlung mit einer Nachtauchlösung (z. B. Slotopas ZN 301/2, Firma Schötter) auf Cr(III)-Basis, welche zur Behandlung von Ni/Zn-Beschichtungen geeignet ist nachweisen. Bei den erfindungsgemäßen Schichten zeigt sie eine deutliche Reaktion, was auf den Einbau von Zn hindeutet.

Die erfindungsgemäßen Schichten zeigen bei einem Salzsprühtest nach 48 h keine Farbänderung.

### zitierte Literatur

US 2,844,530
US 2006/0228569 A1
GB 1 222 969 A
US 4,758,479
US 3,303,111
US 4,833,041
US 4,131,519
US 3,485,725

## Patentansprüche

1. Verfahren zur Abscheidung einer Nickel-Metall-Schicht auf einem Substrat, umfassend folgende Schritte:
a) Bereitstellung eines Nickelbads zur stromlosen Abscheidung einer Nickelschicht, wobei das Bad zusätzlich eine Verbindung eines weiteren Metalls enthält;
b) Abscheidung einer Nickel-Metall-Schicht durch gleichzeitige
b1) Abscheidung des Nickels aus dem Nickelbad und
b2) spannungsunterstützte Abscheidung der weiteren Metallverbindung aus dem bereitgestellten Bad,
b3) wobei die Stromdichte kontinuierlich oder in Stufen ansteigend verändert wird.

2. Verfahren nach dem vorhergehenden Anspruch,
**dadurch gekennzeichnet,**
**dass** es sich bei der stromlos abgeschiedenen Metallschicht um eine Nickel/Phosphor- oder eine Nickel/Borschicht handelt, welche noch mindestens ein weiteres Metall enthält.

3. Verfahren nach einem der vorhergehenden Ansprüche,
**dadurch gekennzeichnet,**
**dass** die spannungsunterstützte Abscheidung bei einer Temperatur von über 50 °C durchgeführt wird.

4. Verfahren nach einem der vorhergehenden Ansprüche,
**dadurch gekennzeichnet,**
**dass** die weitere Metallverbindung eine Zink-Verbindung ist.

5. Verfahren nach einem der vorhergehenden Ansprüche,
**dadurch gekennzeichnet,**
**dass** die weitere Metallverbindung bezogen auf das Metall in einem Bereich zwischen 0,05 mol/l und 0,5 mol/l im Bad vorliegt.

6. Verfahren nach einem der vorhergehenden Ansprüche,
**dadurch gekennzeichnet,**
**dass** für die spannungsunterstützte Abscheidung eine Graphitelektrode verwendet wird.

7. Verfahren nach einem der vorhergehenden Ansprüche,
**dadurch gekennzeichnet,**
**dass** die spannungsunterstützte Abscheidung mit Stromdichten zwischen 0,01 und 5 A/dm² durchgeführt wird.

8. Verfahren nach einem der vorhergehenden Ansprüche,
**dadurch gekennzeichnet,**
**dass** zunächst stromlos eine Nickelschicht oder Nickel-Metall-Schicht abgeschieden wird.

## Claims

1. A method for depositing a nickel-metal layer on a substrate, comprising the following steps:
a) providing a nickel bath for electroless deposition of a nickel layer, wherein the bath additionally contains a compound of another metal;
b) depositing a nickel-metal layer by simultaneous
b1) deposition of nickel from the nickel bath and
b2) voltage-supported deposition of the other metal compound from the bath provided,
b3) wherein the current density is varied continuously or increased in steps.

2. The method as claimed in the preceding claim,
**characterized in that**
the electroless deposited metal layer is a nickel/phosphorus or a nickel/boron layer, which further contains at least one other metal.

3. The method as claimed in one of the preceding claims,
**characterized in that**
the voltage-supported deposition is carried out at a temperature above 50°C.

4. The method as claimed in one of the preceding claims,
**characterized in that**
the other metal compound is a zinc compound.

5. The method as claimed in one of the preceding claims,
**characterized in that**
the other metal compound is present in the bath in a range between 0.05 mol/l and 0.5 mol/l relative to the metal.

6. The method as claimed in one of the preceding claims,
**characterized in that**
a graphite electrode is used for the voltage-supported deposition.

7. The method as claimed in one of the preceding claims,
**characterized in that**
the voltage-supported deposition is carried out with current densities between 0.01 and 5 A/dm².

8. The method as claimed in one of the preceding claims,
**characterized in that**
electroless deposition of a nickel layer or nickel-metal layer is carried out first.

## Revendications

1. Procédé de dépôt d'une couche nickel-métal sur un substrat, comprenant les étapes consistant à :
a) préparer un bain de nickel pour le dépôt autocatalytique d'une couche de nickel, le bain comprenant en outre un composé d'un autre métal ;
b) déposer une couche nickel-métal tout en réalisant simultanément
b1) le dépôt du nickel à partir du bain de nickel et
b2) le dépôt électrolytique de l'autre composé métallique à partir du bain préparé,
b3) la densité de courant étant modifiée par une augmentation continue ou par paliers.

2. Procédé selon la revendication précédente, **caractérisé en ce que** la couche de métal déposée de manière autocatalytique consiste en une couche nickel/phosphore ou nickel/bore, laquelle comprend encore au moins un autre métal.

3. Procédé selon l'une quelconque des revendications précédentes, **caractérisé en ce que** le dépôt électrolytique est effectué à une température supérieure à 50 °C.

4. Procédé selon l'une quelconque des revendications précédentes, **caractérisé en ce que** l'autre composé métallique est un composé de zinc.

5. Procédé selon l'une quelconque des revendications précédentes, **caractérisé en ce que** la concentration en métal apportée par l'autre composé métallique dans le bain est située dans la plage comprise entre 0,05 mol/l et 0,5 mol/l.

6. Procédé selon l'une quelconque des revendications précédentes, **caractérisé en ce qu'**une électrode de graphite est utilisée pour le dépôt électrolytique.

7. Procédé selon l'une quelconque des revendications précédentes, **caractérisé en ce que** le dépôt électrolytique est effectué à l'aide d'une densité de courant comprise entre 0,01 et 5 A/dm².

8. Procédé selon l'une quelconque des revendications précédentes, **caractérisé en ce que** la couche de nickel ou la couche nickel-métal est préalablement déposée de manière autocatalytique.
